# EUROPEAN PATENT SPECIFICATION

(11) **EP 0 348 165 B1**
(45) Date of publication and mention of the grant of the patent: **15.03.1995**
(21) Application number: 89306250.5
(22) Date of filing: 20.06.1989
(51) Int. Cl.: G11B 25/04, G11B 21/08

(54) **Disc recording and/or reproducing apparatus**
Plattenaufzeichnungs- und/oder -wiedergabegerät
Appareil d'enregistrement et/ou de reproduction à disque

(30) Priority: 21.06.1988 JP 152874/88; 12.08.1988 JP 201101/88
(43) Date of publication of application: 27.12.1989
(73) Proprietor: SONY CORPORATION, Tokyo 141 (JP)
(72) Inventor: Tanaka, Tooru c/o Patents Division, Shinagawa-ku Tokyo 141 (JP); Ota, Keiichi c/o Patents Division, Shinagawa-ku Tokyo 141 (JP); Osato, Mamoru c/o Patents Division, Shinagawa-ku Tokyo 141 (JP)
(74) Representative: Purvis, William Michael Cameron

(56) References cited:
- EP-A- 0 104 941
- PATENT ABSTRACTS OF JAPAN, vol. 4, no. 86 (P-016), 20th June 1980;& JP-A-55 048872 (NTT) 08-04-1980
- PATENT ABSTRACTS OF JAPAN, vol. 5, no. 201 (P-94)[873], 19th December 1981;&JP-A-56 121 108 (NIPPON DENKI K.K.) 22-09-1981

## Description

The invention relates to disc recording and/or reproducing apparatus, and is particularly but not exclusively applicable to apparatus used for hard discs and having an optical encoder for controlling positions of a head with respect to the discs.

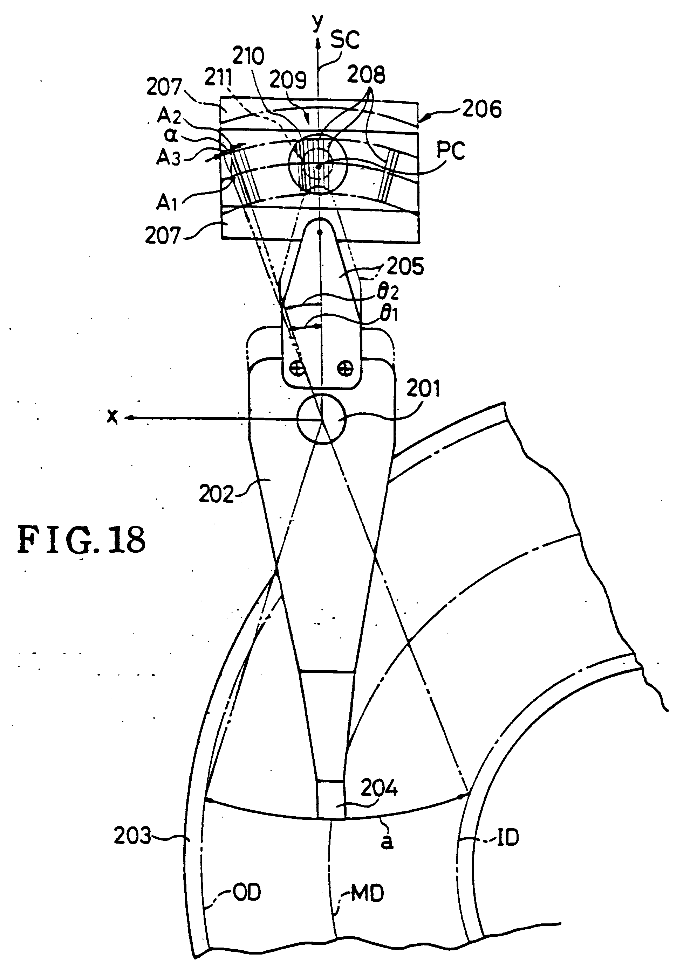

Patent specifications US-A-4593194, US-A-4625109 and US-A-4647769 show optical encoders for regulating a head always into its correct position when the apparatus is used for a hard disc. All the head arms included in the optical encoders shown in these prior specifications are formed as illustrated in Figure 18 of the accompanying drawings.

Referring to Figure 18, a pair of upper and lower floating heads 204 used for recording information on and/or reproducing information from a hard disc 203 are secured to one end of an aluminium head arm 202 which is swung on an arm shaft 201. A stainless-steel wing 205 is secured to the other end of the head arm 202 and secured to the free end of the wing 205 is a glass scale plate 207 of an optical encoder 206.

On the glass scale plate 207, scale marks 208 extending in the radius direction of the arm shaft 201 are formed into an arc round the arm shaft 201, and on the upper side and the lower side of the scale plate 207, a light-emitting element 210 and a light-sensitive element 211 of a photo coupler 209 are fixedly arranged, respectively so that the photo coupler 209 can detect the scale marks 208.

When the hard disc 203 is rotated at high speed on the one hand, and the head arm 202 is swung on the arm shaft 201 on the other hand, in the direction of arrow a by a motor (not shown), so as to record information on or reproduce information from the hard disc 203 by the use of the head 204, the glass scale plate 207 is moved together with the head arm 202, and thereby, tracking by the head 204 can be controlled due to optical detection of the scale marks 208 by the photo coupler 209.

However, in the optical encoder disclosed in the above listed specifications, thermal offtrack errors are often produced. As shown in Figure 18, when a centre PC of the photo coupler 209 coincides with a central line SC of the scale marks 208, the head 204 is positioned over a central line MD of the recorded zone of the hard disc 203, which is defined between an outer limit OD and an inner limit ID. At that time, if the temperature rises, the aluminium head arm 202 and the stainless-steel wing 205 expand in the direction of axis Y, and as a result, the glass scale plate 207 is moved to a position indicated in two-dots-and-dash lines in Figure 18. However, the coefficient of expansion of glass is much smaller than those of aluminium and stainless steel, so that a point A₁ on the glass scale plate 207 moves to a point A₂, because the glass scale plate 207 slightly expands in the direction of axis X, as compared with the expansion of the head arm 202 and the wing 205 in the direction of axis Y.

If the head arm 202 is moved on the same number of tracks under the different atmospheric temperatures, different angles of rotation ϑ₁ and ϑ₂ are made. In other words, there is produced a thermal offtrack error corresponding to the difference of the angles (ϑ₁ - ϑ₂). A larger coefficient of glass must be selected in order to move point A₁ to point A₃ shown in Figure 18.

Moreover, in the prior art, the centre of gravity of the assembly which comprises the head arm 202, the wing 205 and the glass scale plate 207 is positioned apart from the centre of the arm shaft 201, so that it is difficult to move the head 204 at high speed. In addition, it is very difficult to assemble the wing 205 and the scale plate 207, because the centre of the scale marks 208 must be made to coincide with the centre of the arm shaft 201 with an accuracy of about 10 m, when the scale plate 207 is adhered to the wing 205.

European Patent Application No. EP-A-0 104 941 discloses a similar arrangement to that described above wherein a rectangular scale plate is connected to the rotational mounting of a head arm by means of an elongate scale arm so as to be rotatable with the head arm about the shaft of a rotor.

According to one aspect of the invention there is provided disc recording and/or reproducing apparatus to record information on and/or reproduce information from a disc-like recording medium by the use of a head, the disc recording and/or reproducing apparatus comprising:
a sealed receptacle;
a disc drive motor accommodated in the receptacle and capable of rotating the disc-like recording medium;
a head arm accommodated in the receptacle and rotatable on an arm shaft so as to move the head in substantially the radial direction of the disc-like recording medium;
a head drive motor accommodated in the receptacle and capable of making the head arm swing on the arm shaft; and
an optical encoder accommodated in the receptacle and capable of detecting positions of the head with respect to the disc-like recording medium, the optical encoder having a scale plate which is rotatable with the head arm and has scale marks engraved therein extending in the radial direction of the arm shaft, a light-emitting element arranged on one side of the scale plate in opposed relation to the scale marks, a light-sensitive element arranged on the other side of the scale plate in opposed relation to the scale marks, and a reticle plate interposed between the light-sensitive element and the scale plate, so that light emitted from the light-emitting element and which has travelled through the scale plate and the reticle plate is absorbed by the light-sensitive element, whereby positions of the head with respect to the disc-like recording medium can be detected due to a signal given by the light-sensitive element;
characterised in that the scale plate is a circular scale plate which is centred on the arm shaft and comprises a single integral member mounted for rotation about the arm shaft with the head arm, whereby the scale marks move only in the radial direction of the arm shaft if the temperature of the optical encoder increases.

According to another aspect of the invention there is provided disc recording and/or reproducing apparatus to record information on and/or reproduce information from a disc-like recording medium by the use of a head, the disc recording and/or reproducing apparatus comprising:
a sealed receptacle;
a disc drive motor accommodated in the receptacle and capable of rotating the disc-like recording medium;
a head arm accommodated in the receptacle and rotatable on an arm shaft so as to move the head in substantially the radial direction of the disc-like recording medium;
a head drive motor accommodated in the receptacle and capable of making the head arm swing on the arm shaft; and
an optical encoder assembly having a mounting plate with the head arm mounted on the mounting plate for rotation on the arm shaft, and an optical encoder so disposed on the mounting plate as to be mountable in and demountable from the receptacle;
wherein the optical encoder has a circular scale plate which is centred on the arm shaft, the scale plate comprising a single integral member mounted for rotation about the arm shaft with the head arm and having scale marks engraved therein extending in the radial direction of the arm shaft whereby the scale marks move only in the radial direction of the arm shaft if the temperature of the optical encoder increases; a light-emitting element and a light-sensitive element are provided on the mounting plate on opposite sides of the scale plate and in opposed relation to the scale marks; and a reticle plate is interposed between the light-sensitive element and the scale plate and is disposed on the mounting plate, so that light emitted from the light-emitting element and which has travelled through the scale plate and the reticle plate is absorbed by the light-sensitive element, whereby positions of the head with respect to the disc-like recording medium can be detected due to a signal given by the light-sensitive element, since the scale plate is rotated together with the head arm.

Inertia of the head arm and scale plate can be reduced, and thereby, the head can be moved at higher speed. Providing a circular scale plate for rotation about the arm shaft with the head arm, makes it easy to make the centre of rotation of the scale plate coincide with the arm shaft when they are assembled, and as a result, it becomes possible automatically to assemble the head arm and the scale plate.

The coefficient of expansion of the scale plate can be of any value, and as a result, the scale plate can be inexpensively made of cheap materials, such as glass, so as to reduce the cost of the optical encoder.

By securing the optical encoder to a mounting plate so as to constitute a modular encoder assembly which can be mounted on and demounted from the sealed receptacle by means of the mounting plate, assembly, disassembly, adjustment or repair of the apparatus, or changing of the encoder assembly is made easy because the optical encoder assembly can be simply mounted on the sealed receptacle and adjusted.

The optical encoder assembly is preferably so constituted as to be capable of being easily joined to other parts or units. This makes it possible to use the optical encoder assembly as the common part of disc recording and/or reproducing apparatus of various kinds and, as a result, their manufacturing cost can be reduced.

A circuit for detecting positions of the head can be provided in a circuit board disposed in the mounting plate of the optical encoder assembly so that the optical encoder assembly can be easily joined mechanically and electrically to other parts or units. Thus, it becomes easy mechanically and electrically to assemble, disassemble, adjust or repair the apparatus, or change the optical encoder assembly, when the optical encoder assembly is used as the common part of disc recording and/or reproducing apparatus of various kinds.

In a preferred embodiment, a circuit board which has a circuit for detecting positions of the head, is secured to the optical encoder assembly.

The invention is diagrammatically illustrated by way of example in the accompanying drawings in which:-
Figure 1 is an exploded, perspective view of one embodiment of disc recording and/or reproducing apparatus according to the invention;
Figure 2 is a perspective view of the apparatus of Figure 1;
Figure 3 is a plan view, with a cover removed of the disc apparatus of Figure 1;
Figure 4 is an exploded, perspective view of the apparatus of Figure 3;
Figure 5 is an exploded, perspective view of a disc drive motor and hard disc mounted thereon of the apparatus of Figure 1;
Figure 6 is a sectional view of a disc drive motor and hard discs thereon of the apparatus of Figure 1;
Figure 7 is an exploded, perspective view of an optical encoder assembly of the apparatus of Figure 1;
Figure 8 is an exploded, perspective view of an optical encoder of the apparatus of Figure 7;
Figure 9 is a plan view, on an enlarged scale, of an optical encoder assembly of the apparatus of Figure 3;
Figure 10 is a sectional view taken on line X-X of Figure 9;
Figure 11 is a sectional view taken on line XI-XI of Figure 10;
Figure 12 is a bottom view of the apparatus of Figure 1;
Figure 13 is a plan view of a reticle plate shown in Figure 9;
Figure 14 is a sectional view taken on line XIV-XIV of Figure 13;
Figure 15 is a plan view, on an enlarged scale, of the reticle plate of Figure 13;
Figure 16 is a sectional view taken on line XVI-XVI of Figure 12;
Figure 17 is a sectional view of a modified optical encoder assembly; and
Figure 18 is a plan view of an optical encoder of previously proposed kind.

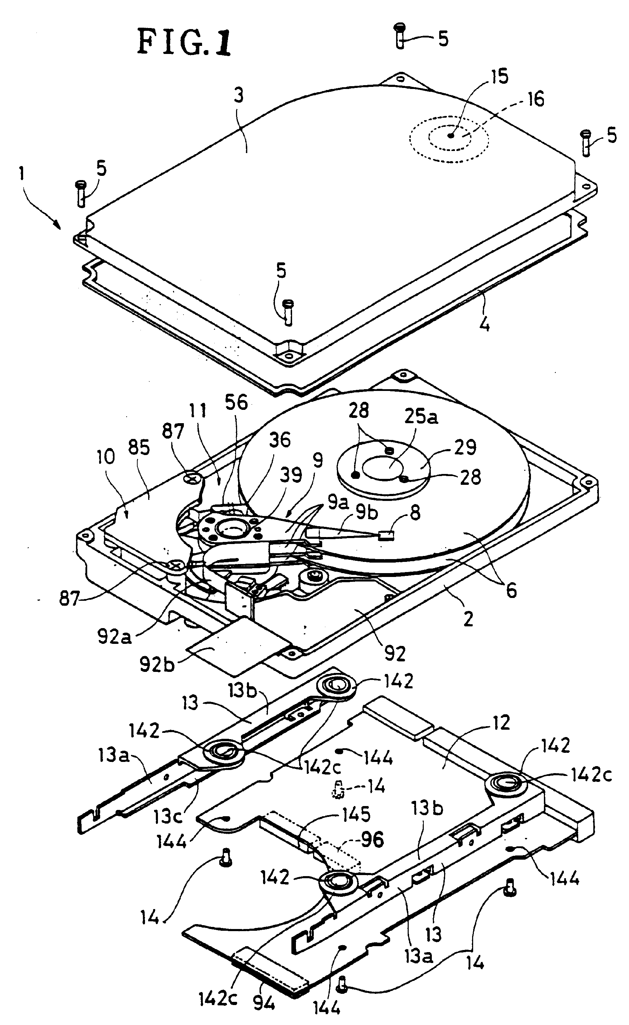

Referring to the drawings and initially to Figures 1 to 3, disc recording and/or reproducing apparatus has a sealed receptacle 1 made, for example, by aluminium die-casting, and comprising a shallow body 2 open at the top, and a shallow cover 3 open at the bottom. A packing 4 is inserted in the joint between the body 2 and the cover 3, and the receptacle 1 is tightened with four screws 5 screwed at each corner of the rectangular receptacle 1.

Accommodated in the sealed receptacle 1 is at least one hard disc 6 used as a recording medium for example, a plurality of hard disc 6 which are stacked in a vertical direction; a disc drive motor 7 to rotate the hard disc 6; a plurality of upper and lower heads 8 to record information on or reproduce information from the hard disc 6; a head arm 9 to support the heads 8; a head drive motor 10; and a modular optical encoder assembly including the head arm 9. Further, a main circuit board comprising a printed circuit board 12 is horizontally secured with screws 14 to the bottom side of the body 2 together with four mounting frames 13, through which the apparatus can be mounted on a computer, and as shown in Figure 1, a breathing hole 15 with a filter 16 is provided in the cover 3.

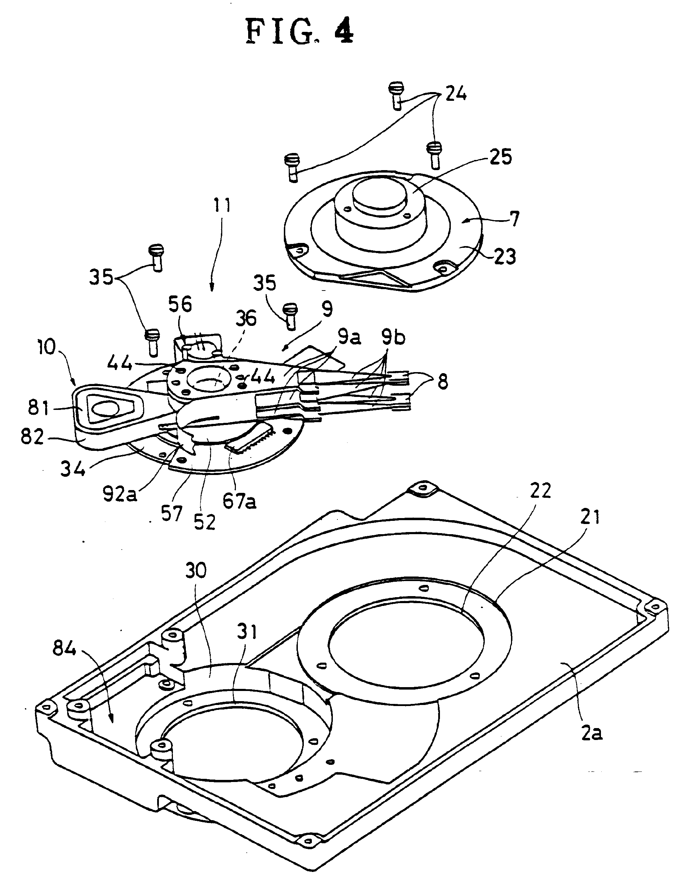

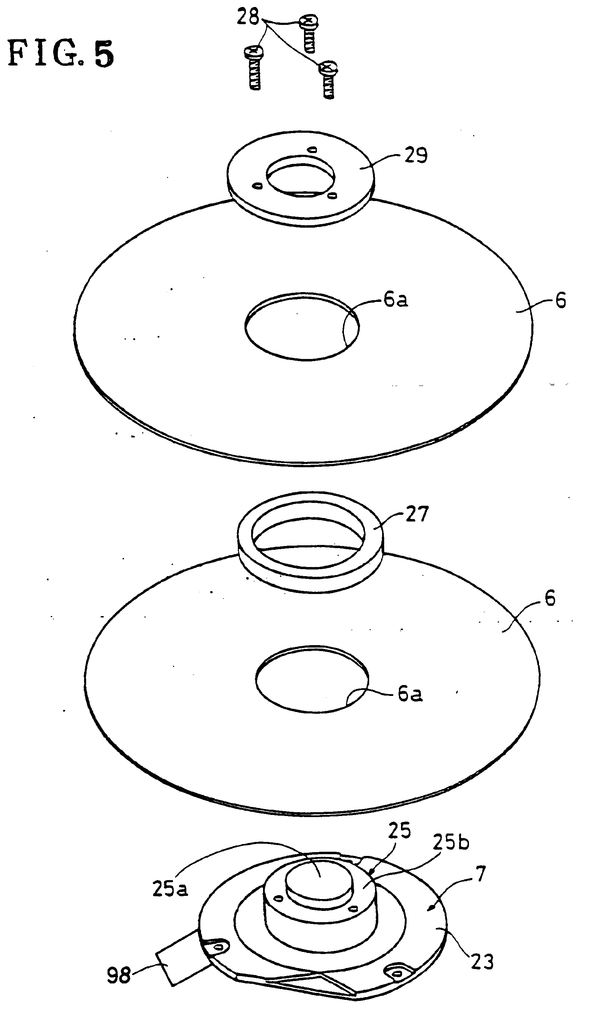

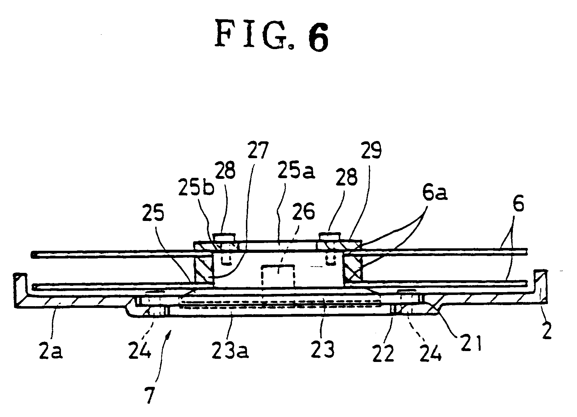

As shown in Figures 4 to 6, a shallow circular recess 21 is disposed in the bottom wall 2a of the body 2, and at the centre of the recess 21, a circular opening 22 is provided. Into the recess 21, a stator 23 with coils (not shown), which is a part of the disc drive motor 7, is fitted from above, and fixed with screws 24. Further, a circular projection 23a projects downwards from the stator 23 and is received in the opening 22. The opening 22 is closed by the stator 23.

A rotor 25 with a magnet (not shown) of the disc drive motor 7 is rotatably mounted on a shaft 26 which projects upwards from the centre of the stator 23, and the lower end of the rotor 25 is loosely received in a recess provided in the stator 23. Each hard disc 6 has an insertion hole 6a provided at the centre thereof. An annular spacer 27 is inserted between the hard discs 6 which are mounted in turn on a shaft 25a which vertically projects upwardly from the centre of the rotor 25. The hard disc 6 and the annular spacer 27 are pressed against a step portion 25b provided at the lower end of the shaft 25a due to the force of a circular pressing plate 29 which is secured with screws 28 to the top surface of the shaft 25a.

As shown in Figure 4, a deep circular recess 30 is also provided in the bottom wall 2a of the body 2, and at the centre of the recess 30, a circular opening 31 is bored. The optical encoder assembly 11 is fitted from above into the recess 30, and secured with screws 35 to the body 2 through a mounting plate 34 of the assembly 11.

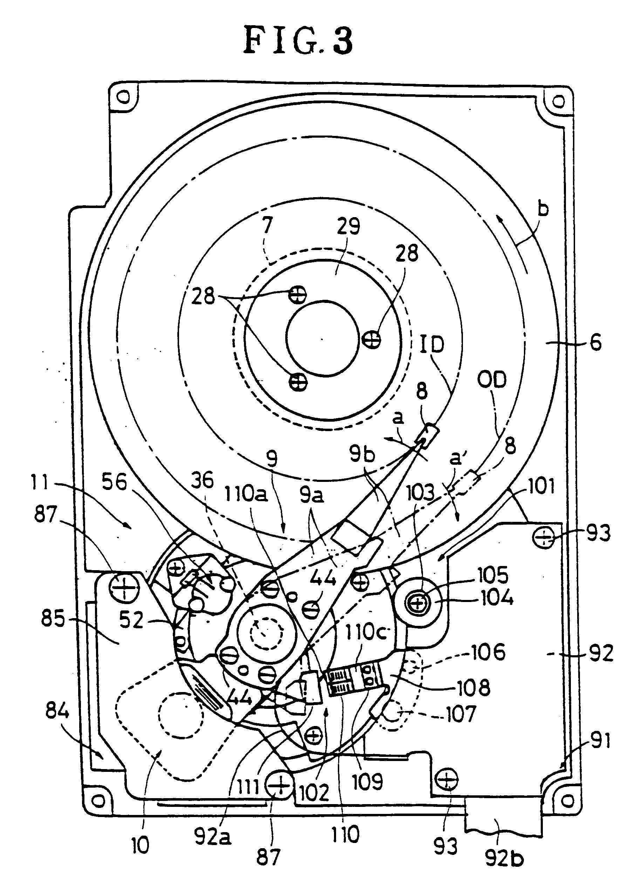

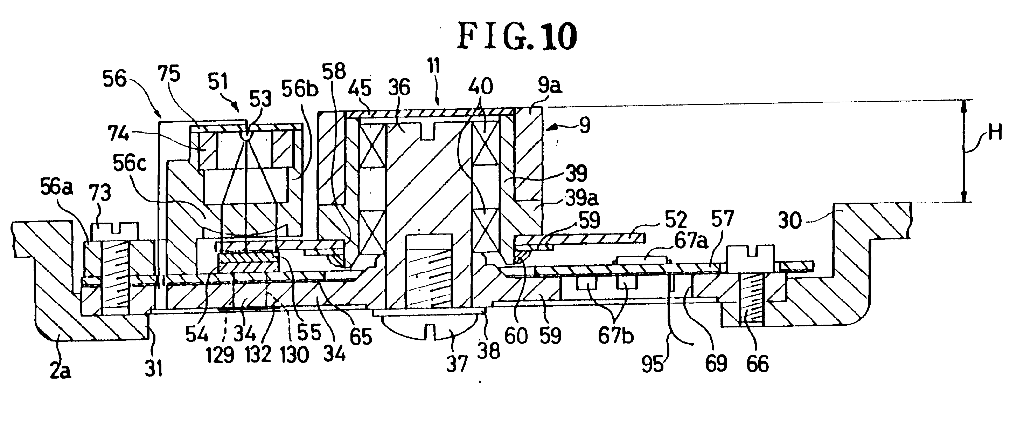

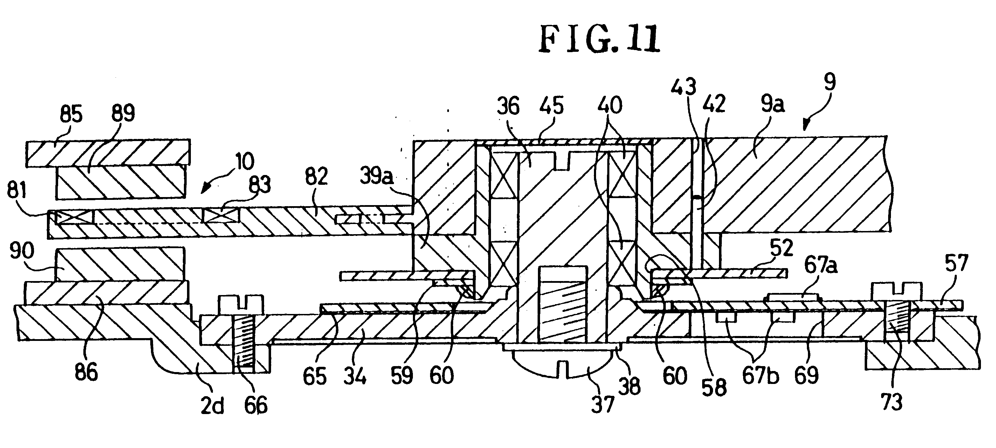

Next, as shown in Figures 3, 4 and 7 to 11, an arm shaft 36 of the optical encoder assembly 11 is secured with a screw 37 and a washer 38 shown in Figure 10, or by force fit to the centre of the mounting plate 34 which is preferably made of steel. A boss 39 of the head arm 9 is rotatably mounted on the shaft 36 through a pair of upper and lower bearings 40.

A body 9a of the head arm 9 preferably made of aluminium is mounted from above on the boss 39, and horizontally placed on a flange 39a which is formed integrally with, and near the lower end of the boss 39. Then, the body 9a of the head arm 9 engaged with the flange 39a through a positioning pin 42 projecting from the flange 39a, and positioning holes 43 bored in the body 9a is fixedly secured to the flange 39a by screws 44 which are passed through the holes 43. The bore 41 of the head arm 9 engaged with the boss 39 is covered by a circular lid 45, which is adhered to the head arm 9 by adhesive. The plurality of floating heads 8 are secured to the end of the body 9a through a plurality of leaf springs 9b.

An optical encoder 51 secured to the assembly 11 comprises a scale plate 52 made of a single disc-like glass plate; a light-emitting element 53, such as a light emitting diode; a light-sensitive element 54, such as a photodiode; a reticle plate 55 made of rectangular glass; a lens housing 56; and a circuit board 57 which is printed and partly circular in shape. The scale plate 52 has a circular hole 58 at the centre thereof and is mounted on the boss 39 of the head arm 9 so as to be sandwiched between the lower face of the flange 39a and a lock washer 59 which is forcibly mounted on the boss 39. The scale plate 52 and the washer 59 are then adhered to the boss 39 by an adhesive 60. Thus, the scale plate 52 made of a single glass plate and fixed to the boss 39, can be rotated about the arm shaft 36 together with the head arm 9.

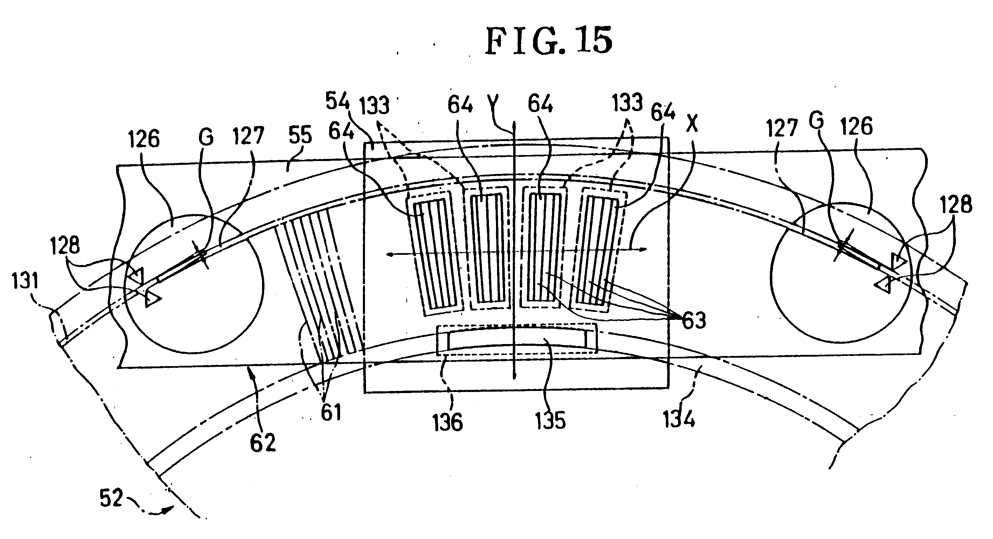

On the scale plate 52, scale marks 61 are circularly marked-off in the radius direction of the arm shaft 36 at regular intervals on an annular scale 62. Also on the reticle plate 55, four scales 64 marked off. Scale marks 63 of these scales 64 are different in phase from one another, but the same in scale interval as those of the scale 62 (see Figure 15).

The circuit board 57 is secured by screws 66 to the mounting plate 34. A shim 65 inserted between the circuit board 57 and the mounting plate 34 functions as an isolator and a seal. Both surfaces of the circuit board 57 are available, and electrical components 67a, 67b are mounted on both these surfaces. Thus, a circuit of amplification and detection of positions necessary for the optical encoder 51 is produced. The electrical components 67b mounted on the lower surface of the board 57 are inserted through holes 68 and 69 which are provided in the mounting plate 34 and the shim 65, so that it is unnecessary to space the circuit board 57 apart from the mounting plate 34. The opening 31 of the recess 30 is closed by the mounting plate 34 and the edges of the through holes 68 and 69 are sealed by the shim 65.

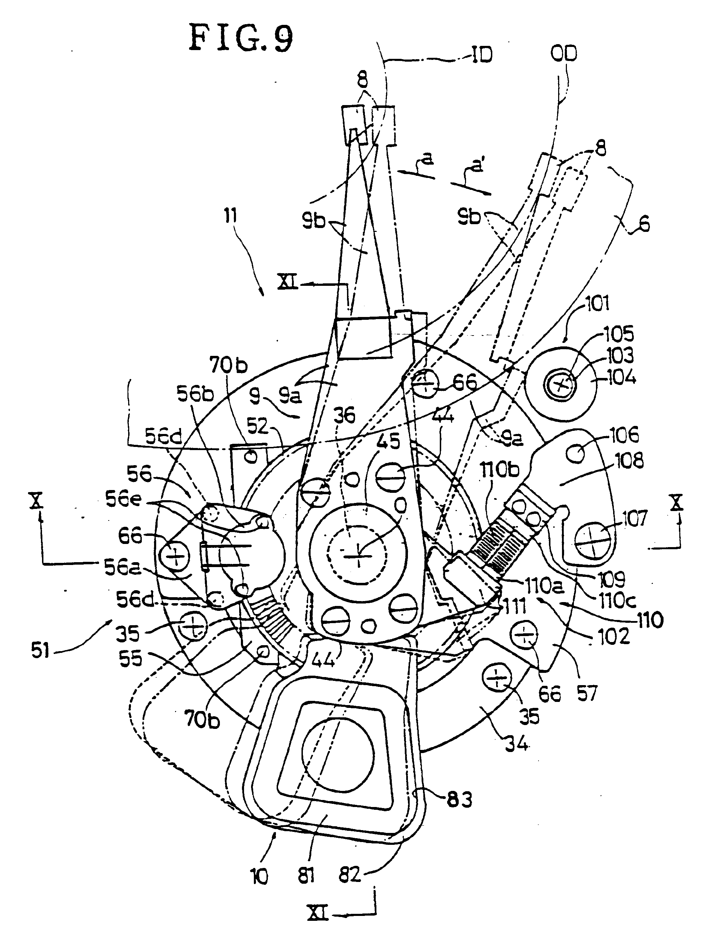

The light-sensitive element 54 is arranged in opposed relation to the scale 62 of the scale plate 52, and mounted on the circuit board 57. The reticle plate 55 also arranged in opposed relation to the scale 62 is horizontally placed between the scale plate 52 and the light-sensitive element 54, and secured with a pair of pins 70 to the mounting plate 34. As shown in Figure 9, the lens-housing 56 made of transparent polycarbonate resin, comprises a base portion 56a; a cylindrical portion 56b which is vertically disposed at one side of the base portion 56a; a lens 56c which is disposed at the lower part of the cylindrical portion 56b; a pair of positioning pins 56d which are disposed in the lower part of the base portion 56a at the same side that the cylindrical portion 56b is disposed; and a pair of welded projections 56e provided at the top of the cylindrical portion 56b.

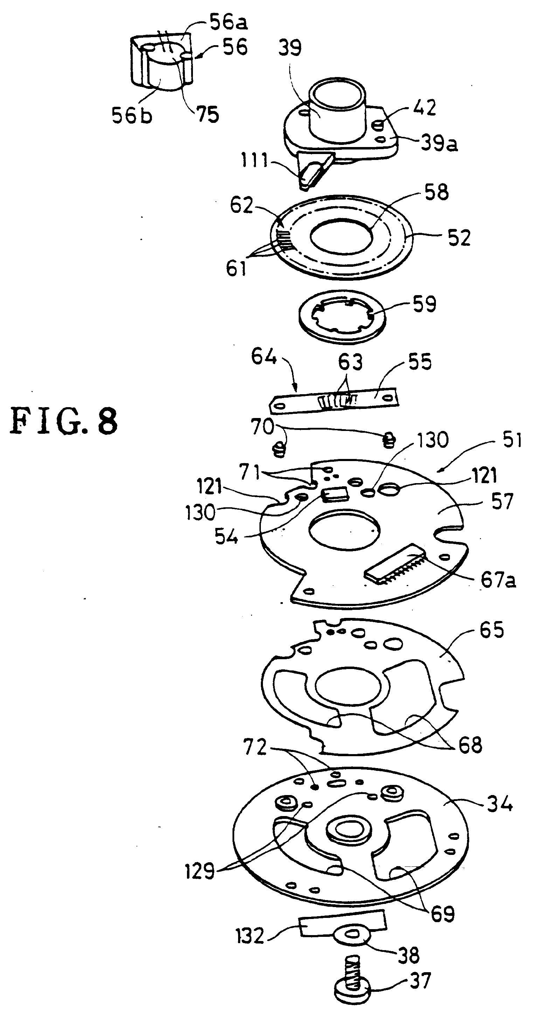

As shown in Figures 8 to 10, the pair of positioning pins 56d of the lens-housing 56 are fitted in a pair of through holes 71 provided in the circuit board 57 and a pair of positioning holes 72 provided in the mounting plate 34, and the lens-housing 56 is then secured to the mounting plate 34 with a screw 73 which passes through the circuit board 57. When the lens-housing 56 is secured, the lens 56c is arranged in opposed relation to the scale 62 of the scale plate 52 and just over the light-sensitive element 54. An annular spacer 74 is fitted in the inside of the upper end of the cylindrical portion 56b and a lid 75 horizontally placed on the cylindrical portion 56b of the lens-housing 56 is fixed to the top of the cylindrical portion 56b with the welded projections 56e. At that time, the light-emitting element 53 secured to the centre of the lower face of the lid 75 is arranged in opposed relation to the scale 62 of the scale plate 52 and just over the lens 56c accommodated in the cylindrical portion 56b.

As a result, the mounting plate 34, the arm shaft 36 and the boss 39 of the optical encoder assembly 11 are accommodated substantially in the recess 30 of the bottom wall 2a of the receptacle 1 as shown in Figure 10, and the light-emitting element 53, the light-sensitive element 54, the reticle plate 55, the lens-housing 56 and the circuit board 57 of the optical encoder assembly 11 are accommodated in spaces formed above and below the scale plate 52, the upper heights of the spaces being defined by the maximum height of the head arm 9. Thus, the height H of the optical encoder assembly 11 measured from the upper surface of the bottom wall 2a can be made very small.

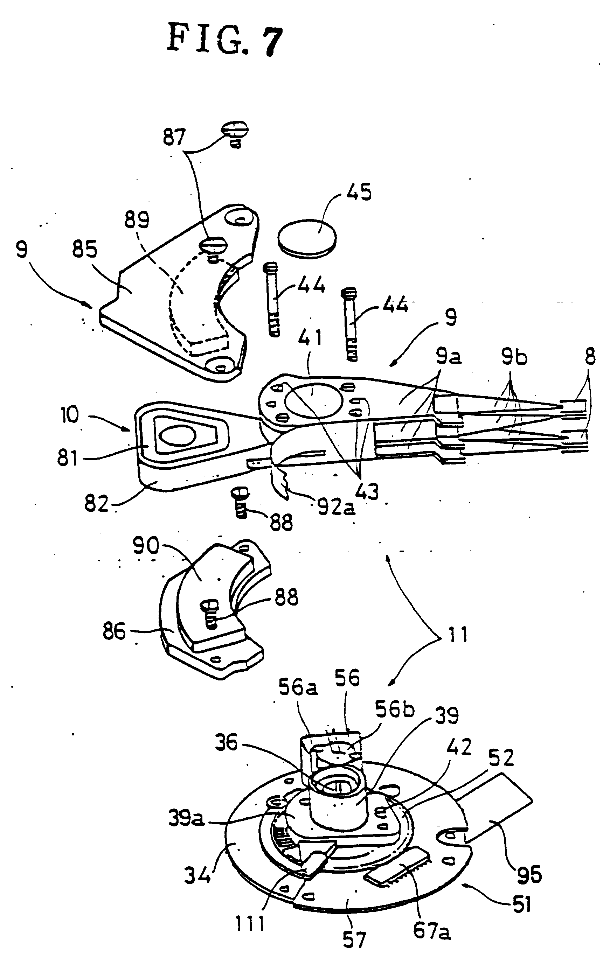

The head drive motor 10 comprises a segment motor as shown in Figures 3, 4, 9 and 11. A bobbin 82 made of synthetic resin is disposed at a side of the head arm 9 just opposite to the side where the heads 8 are mounted, and a coil 81 of the motor 10 is horizontally fitted in a groove 83 which is provided in the bobbin 82 as shown in Figures 9, and fixed by adhesives. As shown in Figures 3 and 7, at one corner 84 of the receptacle 1, a pair of upper and lower yokes 85 and 86 are horizontally arranged above and below the bobbin 82, respectively, and secured with screws 87 and 88 to the bottom wall 2a of the receptacle 1. A pair of flat magnets 89 and 90 of sector shape are fixed by adhesives to the respective surfaces of the yokes 85 and 86, the flat magnets 89 and 90 facing each other and being placed near the coil 81.

As shown in Figure 3, a relay board 92 comprising a flexible printed board is horizontally secured with screws 93 to the bottom wall 2a of the receptacle 1 at a neighbouring corner. The relay board 92 is reinforced by an aluminium plate (not shown), and on the board 92, electrical components of various kinds are mounted. An elastic junction board 92a extending from the relay board 92 is bent into substantially a U-shape, and connected to a side of the head arm 9. The junction board 92a is then connected to the heads 8 through lead wires (not shown).

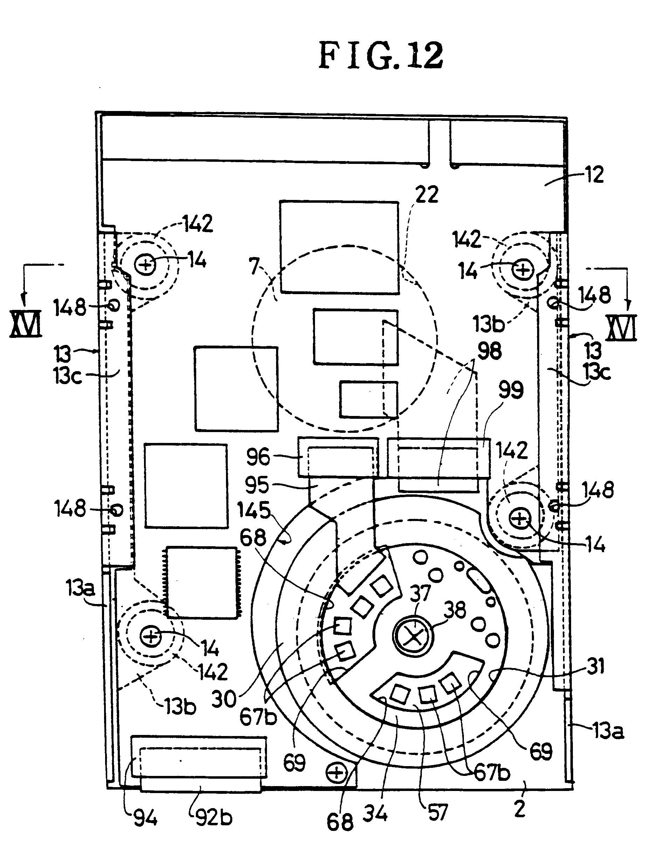

Another junction board 92b extending from the relay board 92 is drawn out from between the body 2 and the cover 3 of the receptacle 1, and connected to a connector 94 mounted on the main circuit board 12 as shown in Figure 12. Further, as shown in Figures 10 and 12, a junction board 95 comprising a flexible printed board, and extending from the circuit board 57 of the optical encoder 51 is drawn out through the through holes 68 of the shim 65 and the through holes 69 of the mounting plate 34, and connected to a connector 96 mounted on the main circuit board 12.

Similarly, a junction board 98 comprising a flexible printed board, is drawn out downwards from the lower part of the stator 23 of the disc drive motor 7 through the hole 122 of the bottom plate 2a of the receptacle 1, and connected to a connector 99 mounted on the main circuit board 12.

In the main circuit board 12, a circuit necessary for recording information on and/or reproducing information from the plurality of hard discs 6; a circuit necessary for driving the disc drive motor 7 and the head drive motor 10; a circuit necessary for making the head arm 9 conduct tracking movements and amplifying tracking signals; and a circuit necessary for detecting positions of the optical encoder 51 and amplifying detecting signals are included.

As shown in Figures 3, 7 and 9, an outer stop 101 and an inner stop 102 of the head arm 9 are secured to the bottom wall 2a of the receptacle 1. The outer stop 101 comprises a sleeve 103 coated with rubber 104. The sleeve 103 is rotatably secured to the bottom wall 2a with a screw 105 passing through the sleeve 103. The inner stop 102 comprises an electromagnet 110 and a support plate 108 which is secured to the bottom wall 2a of the receptacle 1 with a positioning pin 106 and a screw 107, and on which the electromagnet 110 is mounted through a rubber plate 109. The electromagnet 110 has an iron core 110a and a coil 110b surrounding the iron core 110a a magnet 110c being fixed to one end of the iron core 110a. A moving iron 111 secured to one side of a flange 39a of the boss 39 and swung together with the head arm 9 is attracted to the other end of the iron core 110a.

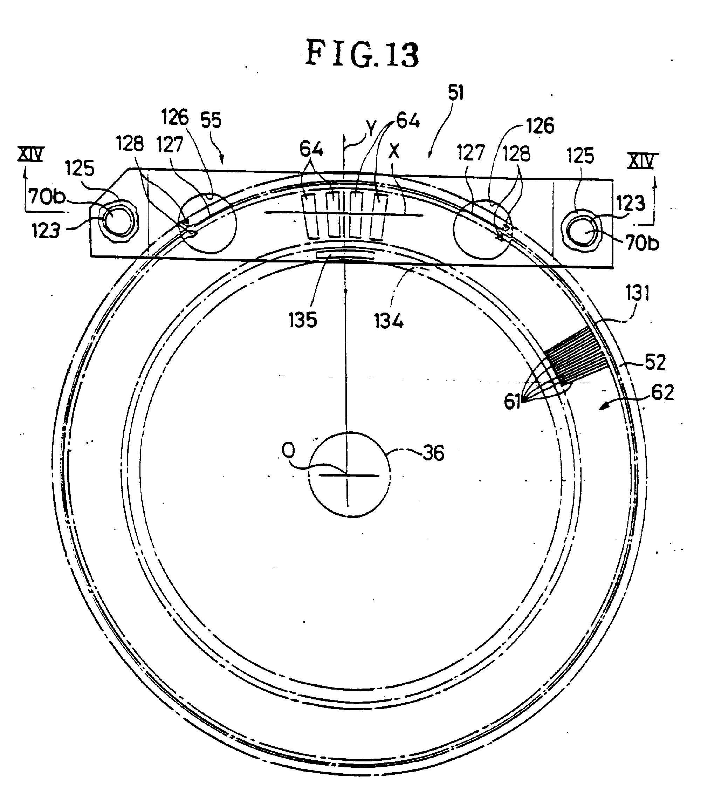

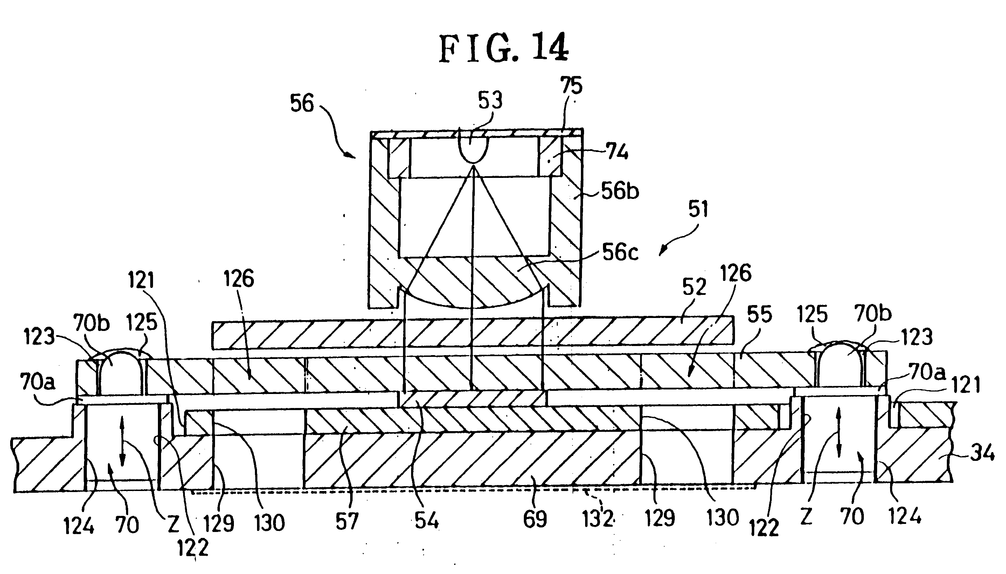

The reticle plate 55 secured to the mounting plate 34 through the pair of pins 70, and horizontally arranged between the scale plate 52 and the light-sensitive element 54 as shown in Figure 13 and 14, is positioned as shown in Figure 15, in order that the scale marks 63 of the four scales 64 provided in the reticle plate 55 are just under the scale marks 61 of the scale 62 provided in the scale plate 52.

The pin 70 is formed to have a projection 70b which is smaller in diameter and vertically projects from the top of the pin 70. Firstly, the pair of pins 70 are fitted in a pair of holes 122 which are vertically provided in the mounting plate 34, two parts of which are fitted in a pair of through holes 121 bored in the circuit board 57, and then, the respective projections 70b of the pair of pins 70 are fitted in a pair of clearance holes 123 provided at both ends of the reticle plate 55.

The pair of pins 70 are vertically moved in the holes 122 in the direction of arrow Z (Figure 14) so as to adjust the height and the horizontality of the reticle plate 55, and then bonded to the mounting plate 34 by adhesive 124. Thereafter, the reticle plate 55 is horizontally moved on the top surfaces of the pair of pins 70 in the directions of arrows x and y (Figure 13), in order that the scale marks 63 of the reticle plate 55 are brought just under the scale marks 61 of the scale plate 52, and then the reticle plate 55 is bonded to the pins 70 by adhesive 125.

As shown in Figure 15, there are a pair of transparent windows 126 on the tangentially outer sides of the four scales 64, and in each of the windows 126, an auxiliary arc-like positioning mark 127 is provided along a circle having the arm shaft 36 as its centre, and having a radius a little larger than the outer sides of the scales 64. Further, a pair of triangular positioning marks 128 are provided on opposite sides of the circle. A distance between the triangular marks 128 is the same as the width of the auxiliary mark 127.

Moreover, as shown in Figure 14, two pairs of through holes 129 and 130 are provided in the mounting plate 34 and the circuit board 57, respectively, so as to position just under the pair of the transparent windows 126, and on the scale plate 52, a circular positioning mark 131 which has the same width as those of the auxiliary marks 127 and is provided so as to enable the auxiliary marks 127 to be brought just under the positioning mark 131 as shown in Figure 15.

When positioning of the reticle plate 55 is performed, the reticle plate 55 is moved in the directions of arrows X and Y with the help of jigs and on observations under optical microscopes which are set just over the windows 126 and the through holes 129 and 130. That is, the reticle plate 55 is moved so as to make the pair of gaps G coincide with the positioning mark 131 of the scale plate 52, and then bring the pair of auxiliary positioning marks 127 just under the positioning mark 131 of the scale plate 52.

According to the method described above, it is possible accurately and easily to position the scale marks 63 of the reticle plate 55 just under the scale marks 61 of the scale plate 52, and it is noted that the through holes 129, 130 are sealed by a sheet 132 indicated in dotted lines in Figure 14. That is, after the reticle plate 55 is positioned and bonded to the pins 70, the sheet 132 is put on and bonded to the lower face of the mounting plate 34.

As shown in Figure 15, the light-sensitive element 54 arranged under the reticle plate 55 has four light-sensitive portions 133 for detecting the position of the head 8. The light-sensitive portions 133 are provided just under the respective scales 64 formed in the reticle plate 55, and correspond to the respective scales 64. A circular transparent window 134 which is concentric with the circular scale 62 is disposed at the radially inner side of the scale plate 52, and in the reticle plate 55 an arc-like transparent window 135 is disposed so as to be positioned just under the transparent window 134 of the scale plate 52. Further, in the light-sensitive element 54, a light-sensitive portion 136 for reference is disposed just under the transparent window 135 of the reticle plate 55.

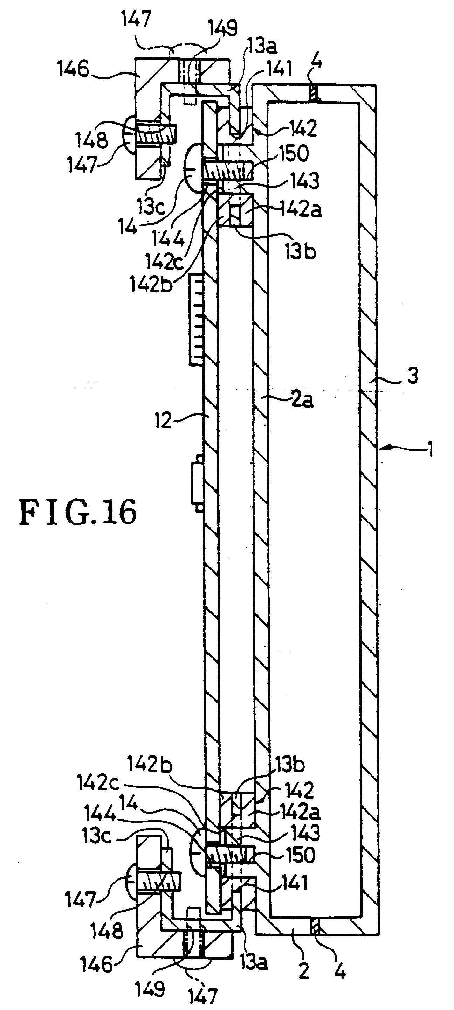

As shown in Figures 12 and 16, the pair of mounting frames 13 secured to the bottom wall 2a of the receptacle 1 together with the main circuit board 12 have a U-shaped section. A pair of through holes 141 are provided in the upper flange 13b of each of the frames 13, and rubber bushings 142 with an upper flange 142a and a lower flange 142b are fitted in the respective through holes 141. Then, four projections 143 vertically projecting downwards from the bottom wall 2a of the receptacle 1 are force-fitted in respective central holes 142c of the rubber bushings 142.

Both sides of the main circuit board 12 are inserted in between the upper flange 13b and the lower flange 13c of the frame 13, and the four male screws 14 inserted from below into through holes 144 provided near both sides of the main circuit board 12 are inserted into the central holes 142c of the bushings 142, and then screwed in tapped holes 150 which are provided in the respective centres of the projections 143. Thus, the main circuit board 12 is secured to the bottom wall 2a of the receptacle 1. It is noted that a part of the main circuit board 12 shown in Figure 12 has a notched portion 145 in which the circular recess 30 largely projecting downwards from the bottom wall 2a is fitted.

Thus it will be seen that the main circuit board 12 and the pair of mounting frames 13 can simply and quickly be securd with the four screws 14 to the bottom wall 2a of the receptacle 1, and the upper flange 142a and the lower flange 142b of the rubber bushing 142 are sandwiched between the bottom wall 2a and the upper flange 13b of the mounting frame 13, the upper flange 13b and the main circuit board 12, respectively. Further, the rubber bushing 142 lies between the projection 143 and the through hole 141 of the upper flange 13. Therefore, the receptacle 1 and the main circuit board 12 are elastically supported in the three dimensional space by the pair of frames 13 due to elasticity of the four rubber bushings 142.

When the apparatus is attached to a piece of apparatus such as a computer, the webs 13a and the lower flanges 13c of the mounting frames 13 are fitted in mounting frames 146 provided on the computer as shown in Figure 16, and male screws 147 indicated in solid lines or chain-dotted lines in Figure 16 are selectively screwed in tapped holes 148 or 149. Thus it is elastically supported by the computer, so that its shock resistance becomes very high. In addition, warping of the mounting frames 13 causes by tightening the screws 147 is prevented by the four rubber bushings 142, so that the receptacle 1 will not be warped.

As the apparatus is constructed as described above, the receptacle 1, in which two hard discs 6 of 95 mm diameter and 1.2 mm thickness are, for example, accommodated, is about 146 mm long, about 116 mm wide and about 15 mm high (the heights of the recesses 21 and 30 are not included) in outside measurement, and the total height H₂ which is the sum of the height H₁ of the receptacle 1 and the height of the mounting frames 13 is about 26 mm.

As shown in Figure 3, when the plurality of hard discs are rotated at high speed by the disc drive motor 7, for example, in direction of arrow b, and the head arm 9 is swung on the arm shaft 36 in the direction of arrows a and a′so as to move the plurality of heads 8 substantially in the radius direction of the hard discs 6 within the recorded zones of the hard discs 6, which are defined by the inner limit ID and the outer limit OD to record information on, or reproduce information from the hard discs, the scale plate 52 of the optical encoder 51 shown in Figure 9 is swung together with the head arm 9 in the direction of the arrows a and a′ on the arm shaft 36, and as shown in Figures 10 and 15, rays of light emitted from the light-emitting element 52 pass through the scale 62 of the scale plate 52 and the scale 64 of the reticle plate 55 in order to be received by the light-sensitive element 53. That is, the rays of light emitted downwards from the light-emitting element 53 within the cylindrical portion 56b are changed into parallel rays by the lens 56c, and passed through the scale 62 of the scale plate 52 which is swung in the direction of arrows a and a′, and the scale 64 of the fixed reticle plate 55. Then, the rays are received by the light-sensitive element 53, so that the positions of the heads 8 with respect to the hard discs 6 are detected.

At that time, the parallel rays pass in turn through the four scales 64 of the reticle plate 55 shown in Figure 15, and are detected by the respective light-sensitive portions 133 of the light-sensitive element 54, so that two pairs of output signals, the phases of which are opposite to each other, are produced: between the two pairs, there is a 90° phase shift. The head drive motor 10 is controlled by the four output signals, and tracking of the head 8 is performed.

As shown in Figure 15, a part of the parallel rays passing through the transparent window 134 of the scale plate 52 and the transparent window 135 of the reticle plate 55 is always detected by the light sensitive portion 136, and the four output signals produced by the light-sensitive portion 133 are checked by the output signal produced by the light-sensitive portion 136.

As shown in Figure 10, since the lens-housing 56 is made of transparent synthetic resin, a part of the rays emitted from the light-emitting element 53 and reflected irregularly within the cylindrical portion 56b of the lens-housing 56 easily passes through the cylindrical portion 56b. Thus, it is prevented that the reflected rays passing through the scale 64 of the reticle plate 55 are obliquely entered in the four light-sensitive portions 133 of the light-sensitive element 54, and thereby, disturbance of the output signals produced by the light-sensitive portions 133 is caused.

The circular scale plate 52 of the optical encoder 51 is made of a single glass plate, so that if the atmospheric temperature changes, the scale plate 52 uniformly expands or contracts in the radius direction of the arm shaft 36, the centre of which coincides with that of the scale plate 52. Therefore, the scale marks 61 engraved in the scale plate 52 in the radius direction of the arm shaft 36 never moves in the tangential direction of the arm shaft 36 due to change of atmospheric temperature. The position of the head 8 is thus always detected accurately, despite atmospheric temperature changes, so that thermal offtrack errors are not produced, and as a result, it becomes possible to record information in high density on the hard disc 6.

The scale plate 52 of the optical encoder 51 is directly secured to the arm shaft 36 and swung together with the head arm 9 on the arm shaft 36, so that inertia of the head arm 9 and scale plate 52 can be reduced. Thus, the head arm 9 is swingable at high speed by the head drive motor 10 in the direction of arrows a and a′ so as to move the head 8 at high speed.

The scale plate 52 of the optical encoder 51 is mounted on the arm shaft 36 in such a way that the boss 39 of the head arm 9 is fitted in the circular hole 58 provided at the centre of the scale plate 52, so that it is easy to make the centre of the scale plate 52 coincide with the centre of the head arm 9, and it is possible automatically and accurately to assemble the head arm 9 and the scale plate 52 into a unit and automatically mount them on the arm shaft 36.

Moreover, it can also be conducted automatically that after the boss 39 of the head arm 9 is fitted in the circular hole 58 of the scale plate 52 and is mounted on the arm shaft 36, the centre of the scale plate 52 is made to coincide with the centre of the arm shaft 36 by optically examining the outer periphery of the scale 62, and the transparent window 134, of the scale plate 52; the lock washer 59 is mounted on the boss 39; and the scale plate 52 is bonded to the boss 39 with the adhesive.

If the scale plate 52 is formed as a disc, and the scale 62 is formed circularly (annularly), it is not necessary to correct the inclination of the scale 52 and the head arm 9 at the time of incorporating the scale plate 52, so that it becomes very easy to incorporate the scale plate 52 automatically.

If the scale plate 52 of the optical encoder 51 expands or contracts due to change of atmospheric temperature, the position of the floating head 8 will always be detected accurately, so that the coefficient of expansion of the scale plate 52 can be free in value. Therefore, it is possible to make the scale plate 52 of cheap materials, such as glass, to reduce the cost of the optical encoder 51.

As soon as a signal is given to stop recording information on or reproducing information from the hard disc 6, flow of current to both the stator coil of the disc drive motor 7 and the coil 81 of the head drive motor 10 is stopped. At that time, a small back electromotive force of the stator coil is produced by the inertia of the rotor 25 of the disc drive motor 7, and thereby, a current is supplied to the coil 81 of the head drive motor 10 so as to swing the head arm 9 in the direction of arrow a in Figure 9.

Thus, the floating head 8 moves in the direction of arrow a beyond the recorded zone which is defined by the inner limit ID indicated in dot-and-dash lines and the outer limit OD indicated in two-dots-and-dash lines in Figure 9. The head arm 9 brought to a position indicated in solid lines in Figure 9 is attracted to the iron core 110a of the electromagnet 110 which functions as a inner stop 102, through the moving iron 111 which is attached to the head arm 9 and locked. A shock produced when the moving iron 111 strikes the iron core 110a, is absorbed by the rubber plate 109.

At the time of recording or reproducing, a small pulse current is fed to the 110b of the electromagnet 110 to weaken the attractive force of the moving iron 111, and thereby, the head arm 9 is unlocked. Further, a current is supplied to the coil 81 of the head drive motor 10, and the head arm 9 is swung in the direction of arrow a′. Thus, the floating head 8 is returned to the recorded zone. It is noted that if the head arm 9 is unexpectedly swung in the direction of arrow a′, for example while the apparatus is assembled, the head arm 9 strikes against the rubber 104 of the outer stop 101, and the shock is absorbed.

The head arm 9 and the optical encoder 51 are mounted on the single mounting plate 34 so as to constitute a modular encoder assembly 11, and the encoder assembly 11 is mounted on and demounted from the sealed receptacle 1 through the mounting plate 34 by the plurality of screws 35. Therefore, it is easy to set the optical encoder assembly 11 in the receptacle 1 after the assembly 11 is assembled and adjusted at the outside of the receptacle 1. Thus, it becomes easy to assembly, disassemble, adjust, or repair the apparatus, or change the encoder assembly 11.

Moreover, the optical encoder assembly 11 is so constituted as to be capable of being easily joined to other parts or units, so that it becomes possible to use the optical encoder assembly 11 as the common part of disc recording and/or reproducing apparatus of various kinds so as to reduce their manufacturing cost.

The circuit board 57 which includes a circuit necessary for detecting the position of the floating head 8 of the optical encoder 51, is provided in the mounting plate 34 of the optical encoder assembly 11, so that the optical encoder assembly 11 is easily joined mechanically and electrically to other parts or units, and as a result, it becomes easy mechanically and electrically to assemble, disassemble, adjust or repair the apparatus, or change the optical encoder assembly 11, when the optical encoder assembly 11 is used as the common part of the disc recording and/or reproducing apparatus of various kinds.

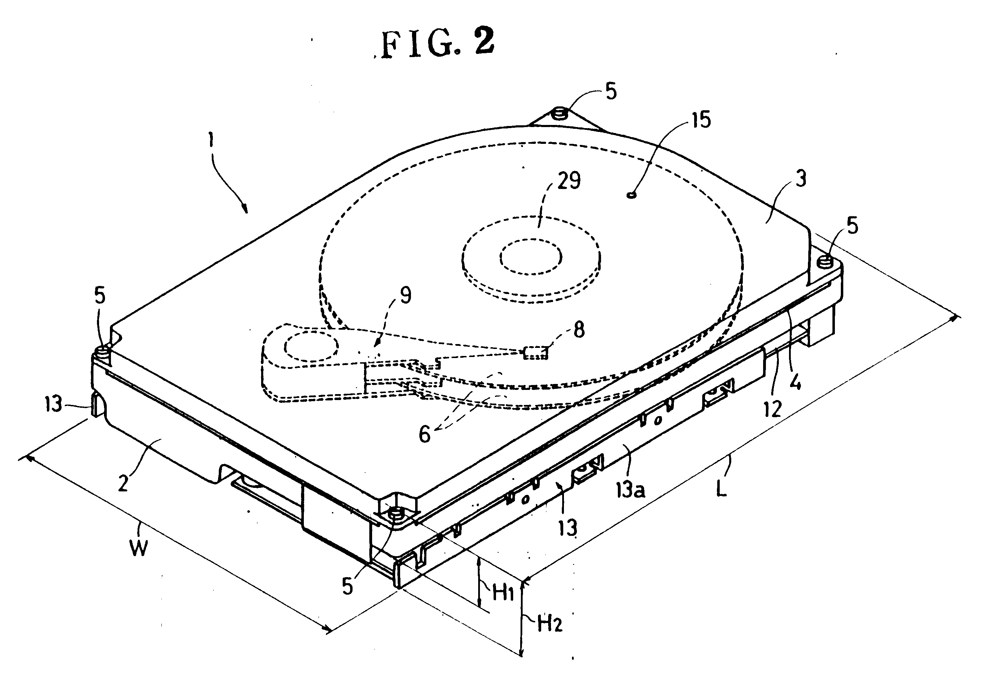

Moreover, as shown in Figure 10, the height of the optical encoder assembly 11 accommodated in and secured to the receptacle 1, can be made very small when measured from the top surface of the bottom wall 2a of the receptacle 1, so that the height of the receptacle 1 shown in Figure 2 can also be made very small (for example, about 15 mm).

The optical encoder 51 can be completely sealed in the receptacle 1, the circular openings 22 and 31 provided in the bottom wall 2a of which are completely closed, so that it is unnecessary to provide a cover for giving shade, or excluding dust on the outside of the bottom wall 2a. Therefore, it is possible to reduce the number of parts and simplify the steps required for the assembly of the apparatus.

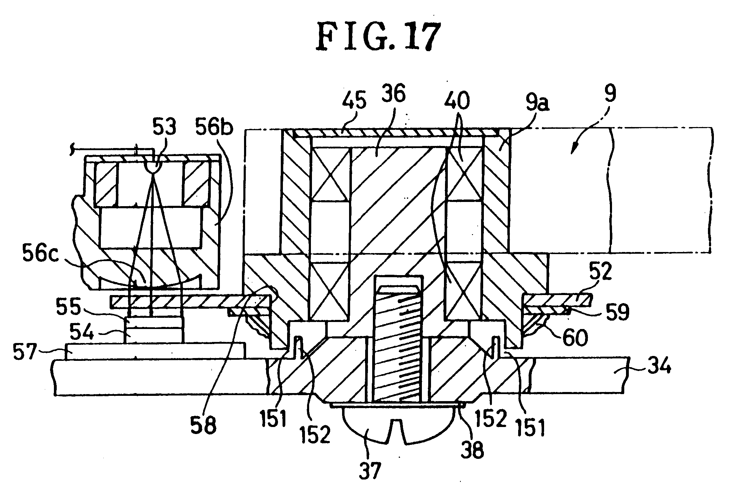

As shown in Figure 10, the circular lid 45 secured to the top of the boss 39 by adhesive prevents grease and dust from the bearings 40 from scattering into the sealed receptacle 1 through the top opening of the boss 39, but if an annular projection 152 projecting upwards from the mounting plate 34 is provided as shown in Figure 17, and arranged to protrude into an annular gap 151 which is formed between the lower end of the boss 39 and the upper surface of the mouting plate 34, grease, and dust from the bearings 40 is prevented from scattering into the sealed receptacle 1 through the gap 151, because a labyrinth is formed in the gap 151.

In the above embodiment, though the arm shaft 36 of the optical encoder assembly 11 is fixedly secured to the mounting plate 34, it may be rotatably secured to the mounting plate 34, and both the head arm 9 and the scale plate 52 may be fixed thereto.

## Claims

1. Disc recording and/or reproducing apparatus to record information on and/or reproduce information from a disc-like recording medium (6) by the use of a head (8), the disc recording and/or reproducing apparatus comprising:
a sealed receptacle (1);
a disc drive motor (7) accommodated in the receptacle and capable of rotating the disc-like recording medium (6);
a head arm (9) accommodated in the receptacle (1) and rotatable on an arm shaft (36) so as to move the head (8) in substantially the radial direction of the disc-like recording medium (6);
a head drive motor (10) accommodated in the receptacle (1) and capable of making the head arm (9) swing on the arm shaft (36); and
an optical encoder (11) accommodated in the receptacle (1) and capable of detecting positions of the head (8) with respect to the disc-like recording medium (6), the optical encoder (11) having a scale plate (52) which is rotatable with the head arm and has scale marks (61) engraved therein extending in the radial direction of the arm shaft, a light-emitting element (53) arranged on one side of the scale plate (52) in opposed relation to the scale marks (61), a light-sensitive element (54) arranged on the other side of the scale plate (52) in opposed relation to the scale marks (61), and a reticle plate (55) interposed between the light-sensitive element (54) and the scale plate (51), so that light emitted from the light-emitting element (53) and which has travelled through the scale plate (52) and the reticle plate (55) is absorbed by the light-sensitive element (54), whereby positions of the head (8) with respect to the disc-like recording medium (6) can be detected due to a signal given by the light-sensitive element (54);
characterised in that the scale plate (52) is a circular scale plate which is centred on the arm shaft (36) and comprises a single integral member mounted for rotation about the arm shaft (36) with the head arm (9), whereby the scale marks (61) move only in the radial direction of the arm shaft (36) if the temperature of the optical encoder (11) increases.

2. Disc recording and/or reproducing apparatus to record information on and/or reproduce information from a disc-like recording medium (6) by the use of a head (8), the disc recording and/or reproducing apparatus comprising:
a scaled receptacle (1);
a disc drive motor (7) accommodated in the receptacle (1) and capable of rotating the disc-like recording medium (6);
a head arm (9) accommodated in the receptacle (1) and rotatable on an arm shaft (36) so as to move the head (8) in substantially the radial direction of the disc-like recording medium (6);
a head drive motor (10) accommodated in the receptacle and capable of making the head arm (9) swing on the arm shaft (36); and
an optical encoder assembly (11, 34) comprising an optical encoder (11) accommodated in the receptacle (1) and capable of detecting positions of the head (8) with respect to the disc-like recording medium (6), the optical encoder (11) having a scale plate (52) which is rotatable with the head arm and has scale marks (61) engraved therein extending in the radial direction of the arm shaft, a light-emitting element (53) arranged on one side of the scale plate (52) in opposed relation to the scale marks (61), a light-sensitive element (54) arranged on the other side of the scale plate (52) in opposed relation to the scale marks (61), and a reticle plate (55) interposed between the light-sensitive element (54) and the scale plate (51), so that light emitted from the light-emitting element (53) and which has travelled through the scale plate (52) and the reticle plate (55) is absorbed by the light-sensitive element (54), whereby positions of the head (8) with respect to the disc-like recording medium (6) can be detected due to a signal given by the light-sensitive element (54); characterized in that the optical encoder assembly (11, 34) includes a mounting plate (34) with the head arm (9) being mounted on the mounting plate (34) for rotation on the arm shaft (36), and the optical encoder (11) being so disposed on the mounting plate (34) as to be mountable in and demountable from the receptacle (1), and in that the scale plate (52) is a circular scale plate (52) which is centred on the arm shaft (36) and comprises a single integral member mounted for rotation about the arm shaft (36) with the head arm (9), whereby the scale marks move only in the radial direction of the arm shaft if the temperature of the optical encoder (11) increases.

3. Disc recording and/or reproducing apparatus according to claim 2, wherein secured to the optical encoder assembly (11) is a circuit board (57) which has a circuit for detecting positions of the head (8).

## Patentansprüche

1. Plattenaufzeichnungs- und/oder Wiedergabevorrichtung zur Aufzeichnung einer Information auf und/oder Wiedergabe einer Information von einem plattenförmigen Aufzeichnungsmedium (6) durch die Verwendung eines Kopfes (8), wobei die Plattenaufzeichnungs- und/oder Wiedergabevorrichtung aufweist:
einen abgedichteten Behälter (1);
einen Plattenantriebsmotor (7), der im Behälter untergebracht ist und der das plattenförmige Aufzeichnungsmedium (6) drehen kann;
einen Kopfarm (9), der im Behälter (1) untergebracht ist und der auf einer Armwelle (36) so drehbar ist, daß er den Kopf (8) im wesentlichen in der radialen Richtung des plattenförmigen Aufzeichnungsmediums (6) verschiebt;
einen Kopfantriebsmotor (10), der im Behälter (1) untergebracht ist und der den Kopfarm (9) um die Armwelle (36) verschwenken kann; und
einen optischen Codierer (11), der im Behälter (1) untergebracht ist und Positionen des Kopfes (8) in bezug auf das plattenförmige Aufzeichnungsmedium (6) ermitteln kann, wobei der optische Codierer (11) eine Skalenplatte (52) aufweist, die mit dem Kopfarm drehbar ist, und die Skalenmarkierungen (61) aufweist, die darin eingraviert sind und sich in der radialen Richtung der Armwelle erstrecken, ein lichtemittierendes Element (53), das auf der einen Seite der Skalenplatte (52) entgegengesetzt zu den Skalenmarkierungen (61) angeordnet ist, ein lichtempfindliches Element (54), das auf der anderen Seite der Skalenplatte (52) gegenüber den Skalenmarkierungen (61) angeordnet ist, und eine Fadenkreuzplatte (55), die zwischen dem lichtempfindlichen Element (54) und der Skalenplatte (52) angeordnet ist, so daß das Licht, das vom lichtemittierenden Element (53) emittiert wird und das durch die Skalenplatte (52) und die Fadenkreuzplatte (55) gelaufen ist, durch das lichtempfindliche Element (54) absorbiert wird, wodurch Positionen des Kopfes (8) in bezug auf das plattenförmige Aufzeichnungsmedium (6) aufgrund eines durch das lichtempfindliche Element (54) ausgegebenen Signals ermittelt werden können;
dadurch gekennzeichnet, daß die Skalenplatte (52) eine runde Skalenplatte ist, die auf der Armwelle (36) zentriert ist, und ein einzelnes einstückiges Bauteil aufweist, das zu einer Drehbewegung um die Armwelle (36) am Kopfarm (9) befestigt ist, wobei die Skalenmarkierungen (61) sich nur in der radialen Richtung der Armwelle (36) verschieben, wenn die Temperatur des optischen Codierers (11) ansteigt.

2. Plattenaufzeichnungs- und/oder Wiedergabevorrichtung zur Aufzeichnung einer Information auf und/oder Wiedergabe einer Information von einem plattenförmigen Aufzeichnungsmedium (6) durch die Verwendung eines Kopfes (8), wobei die Plattenaufzeichnungs- und/oder Wiedergabevorrichtung aufweist:
einen abgedichteten Behälter (1);
einen Plattenantriebsmotor (7), der im Behälter untergebracht ist und der das plattenförmige Aufzeichnungsmedium (6) drehen kann;
einen Kopfarm (9), der im Behälter (1) untergebracht ist und der auf einer Armwelle (36) so drehbar ist, daß er den Kopf (8) im wesentlichen in der radialen Richtung des plattenförmigen Aufzeichnungsmediums (6) verschiebt;
einen Kopfantriebsmotor (10), der im Behälter (1) untergebracht ist und der den Kopfarm (9) um die Armwelle (36) verschwenken kann; und
eine optische Codiereinrichtung (11, 34), die einen optischen Codierer (11) aufweist, der im Behälter (1) untergebracht ist und Positionen des Kopfes (8) in bezug auf das plattenförmige Aufzeichnungsmedium (6) ermitteln kann, wobei der optische Codierer (11) eine Skalenplatte (52) aufweist, die mit dem Kopfarm drehbar ist, und die Skalenmarkierungen (61) aufweist, die darin eingraviert sind und sich in der radialen Richtung der Armwelle erstrecken, ein lichtemittierendes Element (53), das auf der einen Seite der Skalenplatte (52) entgegengesetzt zu den Skalenmarkierungen (61) angeordnet ist, ein lichtempfindliches Element (54), das auf der anderen Seite der Skalenplatte (52) gegenüber den Skalenmarkierungen (61) angeordnet ist, und eine Fadenkreuzplatte (55), die zwischen dem lichtempfindlichen Element (54) und der Skalenplatte (52) angeordnet ist, so daß das Licht, das vom lichtemittierenden Element (53) emittiert wird und das durch die Skalenplatte (52) und die Fadenkreuzplatte (55) gelaufen ist, durch das lichtempfindliche Element (54) absorbiert wird, wodurch Positionen des Kopfes (8) in bezug auf das plattenförmige Aufzeichnungsmedium (6) aufgrund eines durch das lichtempfindliche Element (54) ausgegebenen Signals ermittelt werden können;
dadurch gekennzeichnet,
daß die optische Codiereinrichtung (11, 34) eine Befestigungsplatte (34) aufweist, wobei der Kopfarm (9) auf der Befestigungsplatte (34) zur Drehung auf der Armwelle (36) befestigt ist, und der optische Codierer (10) so auf der Befestigungsplatte (34) angeordnet ist, daß er im Behälter (1) montierbar und daraus demontierbar ist, und daß die Skalenplatte (52) eine runde Skalenplatte (52) ist, die auf der Armwelle (36) zentriert ist und eine einziges einstückiges Bauteil für eine Drehbewegung um die Armwelle (36) mit dem Kopfarm (9) aufweist, wodurch die Skalenmarkierungen sich nur in der radialen Richtung der Armwelle verschieben, wenn die Temperatur des optischen Codierers (11) ansteigt.

3. Plattenaufzeichnungs- und/oder Wiedergabevorrichtung nach Anspruch 2, wobei an der optischen Codiereinrichtung (11) eine Schaltungsplatte (57) befestigt ist, die eine Schaltung zur Ermittlung von Positionen des Kopfes (8) aufweist.

## Revendications

1. Dispositif d'enregistrement et/ou de reproduction de disques pour enregistrer sur et/ou reproduire une information depuis un support d'enregistrement (6) sous forme de disque par l'utilisation d'une tête (8), le dispositif d'enregistrement et/ou de reproduction de disques comportant :
un réceptacle hermétique (1) ;
un moteur d'entraînement de disque (7) logé dans le réceptacle et pouvant entraîner en rotation le support d'enregistrement (6) sous forme de disque ;
un bras de tête (9) logé dans le réceptacle (1) et pouvant tourner sur un arbre de bras (36) de manière à déplacer la tête (8) sensiblement selon la direction radiale du support d'enregistrement (6) sous forme de disque ;
un moteur d'entraînement de tête (10) logé dans le réceptacle (1) et pouvant faire osciller le bras de tête (9) sur l'arbre de bras (36) ; et
un codeur optique (11) logé dans le réceptacle (1) et pouvant détecter des positions de la tête (8) par rapport au support d'enregistrement (6) sous forme de disque, le codeur optique (11) possédant une plaque graduée (52) pouvant tourner avec le bras de tête et possédant des graduations (61) gravées s'étendant selon la direction radiale de l'arbre du bras, un élément émetteur de lumière (53) disposé sur un côté de la plaque graduée (52) en vis-à-vis des graduations (61), un élément photosensible (54) disposé sur l'autre côté de la plaque graduée (52) en vis-à-vis des graduations (61), et une plaque à réticule (55) interposée entre l'élément photosensible (54) et la plaque graduée (51), de sorte que la lumière émise par l'élément émetteur de lumière (53) et qui a traversé la plaque graduée (52) et la plaque à réticule (55) est absorbée par l'élément photosensible (54), de telle sorte que des positions de la tête (8) par rapport au support d'enregistrement (6) sous forme de disque peuvent être détectées grâce à un signal délivré par l'élément photosensible (54) ;
caractérisé en ce que la plaque graduée (52) est une plaque graduée circulaire centrée sur l'arbre de bras (36) et comporte un seul élément monté à rotation autour de l'arbre de bras (36) faisant corps avec le bras de tête (9), de telle sorte que les graduations (61) se déplacent uniquement dans la direction radiale de l'arbre de bras (36) si la température du codeur optique (11) augmente.

2. Dispositif d'enregistrement et/ou de reproduction de disque pour enregistrer une information sur et/ou reproduire une information depuis un support d'enregistrement (6) sous forme de disque par l'utilisation d'une tête (8), le dispositif d'enregistrement et/ou de reproduction de disque comportant :
un réceptacle hermétique (1) ;
un moteur d'entraînement de disque (7) logé dans le réceptacle (1) et pouvant entraîner en rotation le support d'enregistrement (6) sous forme de disque ;
un bras de tête (9) logé dans le réceptacle (1) et pouvant tourner sur un arbre de bras (36) de manière à déplacer la tête (8) sensiblement dans la direction radiale du support d'enregistrement (6) sous forme de disque ;
un moteur d'entraînement de tête (10) logé dans le réceptacle et pouvant faire osciller le bras de tête (9) sur l'arbre de bras (36) ; et
un ensemble de codeur optique (11, 34) comportant un codeur optique (11) logé dans le réceptacle (1) et pouvant détecter des positions de la tête (8) par rapport au support d'enregistrement (6) sous forme de disque, le codeur optique (11) possédant une plaque graduée (52) pouvant tourner avec le bras de tête et possédant des graduations (61) gravées s'étendant dans la direction radiale de l'arbre du bras, un élément émetteur de lumière (53) disposé sur un côté de la plaque graduée (52) en vis-à-vis des graduations (61), un élément photosensible (54) disposé sur l'autre côté de la plaque graduée (52) en vis-à-vis des graduations (61), et une plaque à réticule (55) interposée entre l'élément photosensible (54) et la plaque graduée (52), de sorte que la lumière émise par l'élément émetteur de lumière (53) et qui a traversé la plaque graduée (52) et la plaque à réticule (55) est absorbée par l'élément photosensible (54), de telle sorte que des positions de la tête (8) par rapport au support d'enregistrement (6) sous forme de disque peuvent être détectées grâce à un signal délivré par l'élément photosensible (54) ; caractérisé en ce que l'ensemble de codeur optique (11, 34) comprend une plaque de montage (34) avec le bras de tête (9) monté sur la plaque de montage (34) en vue d'une rotation sur l'arbre de bras (36) et le codeur optique (11) étant disposé sur la plaque de montage (34) de manière à pouvoir être monté dans et démonté du réceptacle (1), et en ce que la plaque graduée (52) est une plaque graduée circulaire (52) centrée sur l'arbre de bras (36) et comporte un unique élément monté à rotation autour de l'arbre de bras (36) faisant corps avec le bras de tête (9), de telle sorte que les graduations peuvent se déplacer uniquement dans la direction radiale de l'arbre de bras si la température du codeur optique (11) augmente.

3. Dispositif d'enregistrement et/ou de reproduction de disque selon la revendication 2, dans lequel est fixée à l'ensemble de codeur optique (11) une plaquette de circuit (57) qui possède un circuit de détection de position de la tête (8).
